# EUROPEAN PATENT APPLICATION

(11) **EP 1 302 420 A2**
(43) Date of publication of application: **16.04.2003**
(21) Application number: 02079226.3
(22) Date of filing: 09.10.2002
(51) Int. Cl.: B65G 67/00

(54) **Device for receiving material from a lorry and discharging the material for further handling**

(30) Priority: 10.10.2001 NO 20014933
(71) Applicant: Saxlund AS, 4685 Nodeland (NO)
(72) Inventor: Lindekleiv, Arne, 4700 Vennesla (NO)
(74) Representative: Johansson, Lars E.

(57) **Abstract**

A device for receiving material from a lorry (3) and discharging the material for further handling comprises a container (1) with an intake (2) and an outlet (5) for the material. The container (1) has a substantially horizontal axis of rotation (6) at the outlet (5), and is rotatable between a lowered position where a bottom (7) in the container is located lower than the axis of rotation (6) and the outlet (5), and where the lorry (3) can tip material on to the bottom (7) of the container, and a raised position whore the bottom (7) of the container is located higher than the axis of rotation (6) and the outlet (5), and with the aid of gravity the material can be discharged through the outlet (5).

## Description

The invention relates to a device comprising a container with an intake for receiving material from a lorry and an outlet for discharging the material for further handling.

Material of various kinds, for example bulk material such as animal feed and sawdust, or a more random assortment of material such as refuse, can be transported by lorry to a receiver. The receiver may be a factory where the material is ground up and subjected to further treatment, or a packing plant where the material is packed into bags.

In order to achieve fast and inexpensive transfer of the material from the lorry to the receiver, it is desirable for the lorry to back up to and tip the material directly into a container, which has an outlet for discharging the material for further handling. The material may, for example, be tipped on to the top of a container, at the bottom of which is a funnel that transfers the material on to a conveyor belt. Another example is where the material is tipped into a channel, at the bottom of which is a screw conveyor that passes along the material.

A lorry can transport a volume of, for example, 10-30m³. To enable so much material to be tipped directly into a container without the material overflowing, during the tipping operation the rear edge of the loading area must be located at least a couple of metres higher than the bottom of the container. Moreover, if the container's outlet is composed of a funnel in the bottom of the container, and under the outlet there is a conveyor standing on a base, the combined height of this funnel and the conveyor will usually be at least one metre. To enable material to be tipped directly from a lorry into a container that has an outlet for discharging the material for further handling, therefore, the base for devices employed in the further handling of the material must in practice be located at least 2-3 metres lower than the base on which the lorry stands during the tipping operation.

For some lorry receivers it is no easy inatter to arrange the base for devices employed in the further handling of the material a distance as great as 2-3 metres lower than the base on which the lorry stands during the tipping operation. One reason for this may be, for example, that high levels of ground water prevent the ground from being excavated. It may, of course be possible to establish the necessary height difference by the lorry backing up a ramp and tipping the material from the ramp. However, a ramp of this kind is expensive to build, and a large open area is required in front of the ramp to enable the lorry to be reversed up the ramp, There is, moreover, a certain risk attached to backing a large lorry up a ramp. There are therefore several reasons why there may be problems associated with tipping the material directly into a container that has an outlet for discharging the material for further handling.

The object of the invention is to provide a device for receiving material from a lorry and discharging the material for further handling, where there should be no need for the base for devices employed in the material's further handling to be so much lower than the base on which the lorry stands during the tipping operation as is the case in the prior art. The bases on which devices employed in the material's further handling and the lorry stand should preferably be at substantially the same level.

The object is achieved according to the invention with a device as indicated in claim 1.

The invention therefore consists in a device comprising a container with an intake for receiving material from a lorry and an outlet for discharging the material for further handling. The container has a substantially horizontal axis of rotation at the outlet, and is rotatable between a lowered position where a bottom in the container is located lower than the axis of rotation and the outlet, and where the lorry can tip material on to the bottom of the container, and a raised position where the bottom of the container is located higher than the axis of rotation and the outlet, and the material, with the aid of gravity, can be discharged through the outlet.

In one embodiment the outlet is arranged so that it does not move relative to the horizontal axis of rotation.

In this patent the term material should be understood to refer to any loose material, such as corn, sawdust, bark, sewage sludge, industrial sludge and household refuse.

During use of the invention, the lorry tips the material on to the bottom of the container when the container is located in a lowered position, where the bottom of the container is lower than the loading area. The lorry drives away, and the container with its bottom is rotated to a raised position, where the bottom of the container is located higher than the outlet. The material is thereby raised, and with the aid of gravity the material can be discharged through the outlet.

Advantageous embodiments of the invention will be apparent from the detailed description, in which:
fig. 1 is a perspective view of the device according to the invention, where a container is in a lowered position, and
fig. 2 is a perspective view of the device in fig. 1 viewed from a different angle, where the container is in a raised position.

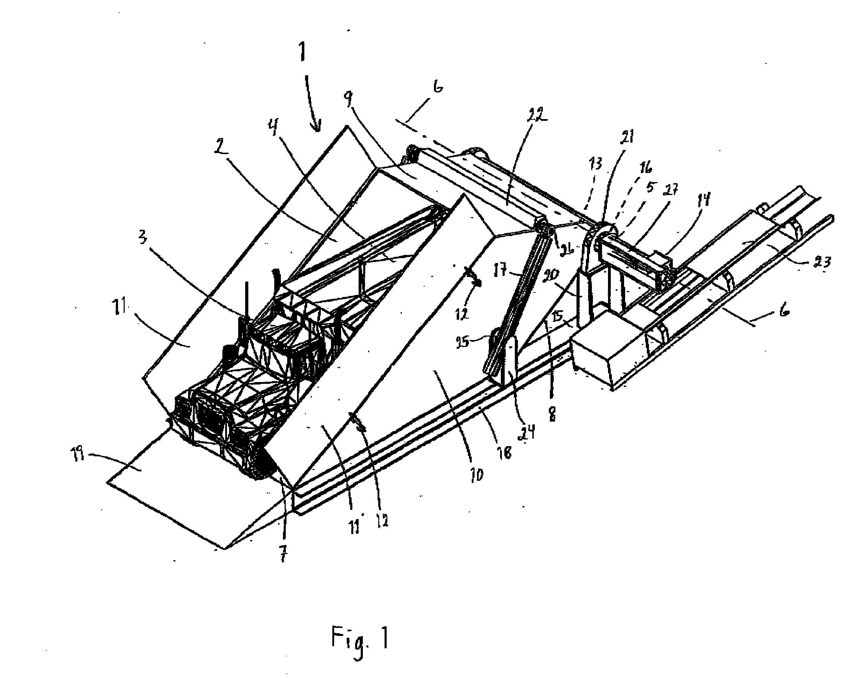

Fig. 1 illustrates the device according to the invention, comprising a container 1. A lorry 3 has reversed in through an intake 2 in the container 1 and tipped a load of material, for example bark, from a loading area 4 down on to the bottom 7 of the container. To ensure that all the material is tipped out, the lorry 3 has to drive forward during the tipping operation, with the result that the material is to some extent scattered over the bottom 7 of the container. The lorry then drives out and away through the container's intake 2.

The container I has a substantially horizontal axis of rotation 6, which is located at an outlet 5. In fig. 1 the container 1 is illustrated in a lowered position. Here, the bottom 5 is located lower than the axis of rotation and the outlet 5. From fig. 1 it can be understood the outlet 5 is arranged so that it does not move relative to the horizontal axis of rotation 6.

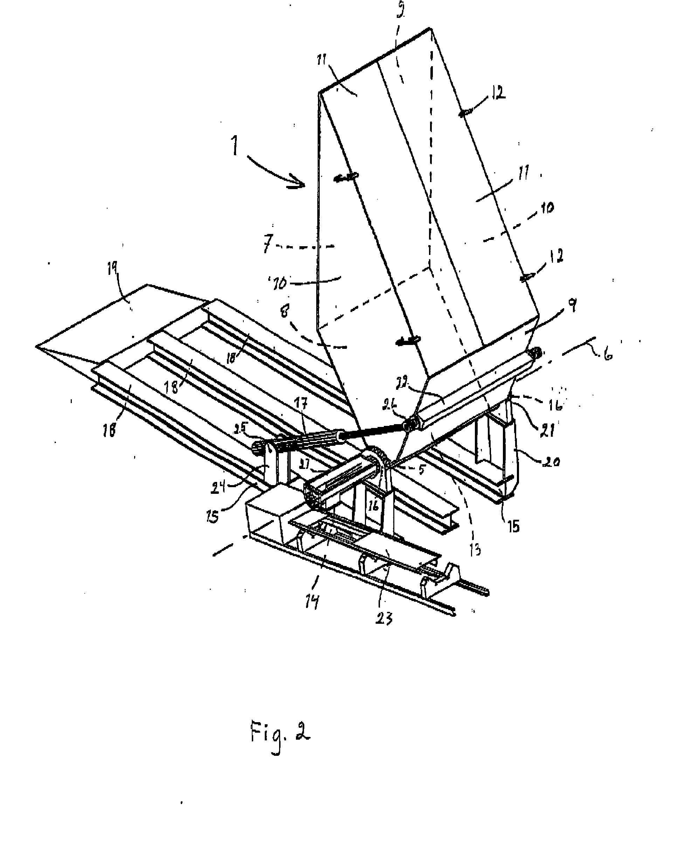

In fig. 2 the container 1 is rotated to a raised position. Here, the bottom 7 of the container is located higher than the axis of rotation 6 and the outlet 5. With the aid of gravity the material can now be discharged through the outlet 5 for further handling.

The container 1 is constructed from welded steel plates. A side of the container 1 that extends between the bottom 7 of the container and the outlet 5 forms a lower inclined plane 8 when the container 1 is located in a lowered position. When the container 1 is located in a raised position the inclined plane 8 forms a part of a funnel towards the outlet 5. A second side of the container 1 that extends between the container's intake 2 and the outlet 5 forms a top 9 when the container 1 is located in a lowered position, and forms a part of the funnel towards the outlet 5 when the container 1 is located in a raised position.

The container also comprises two long sides 10 connecting the bottom 7, the inclined plane 8 and the top 9. The intake 2 is arranged at an end of the container's bottom 7, and can be closed and opened by means of two covers 11 that are hinged to the long sides 10 by hinges 12. The covers 11 can be moved, for example, by means of non-illustrated hydraulic cylinders.

When the container is located in a lowered position the bottom 7 is horizontal or approximately horizontal. The bottom 7 is adapted so that it can be driven on by the lorry 3, and this is achieved by having the bottom 7 composed of a sufficiently thick steel plate, which may be provided with internal ribs or knobs to increase the grip of the lorry's tyres. The bottom 7 is supported in the container's lowered position by a base frame 18. A drive-up ramp 19 for the lorry 3 is arranged in extension of the container's bottom 7 and the base frame 18.

In the illustrated embodiment of the container 1 the funnel towards the outlet 5 is elongated, with only the distance between the inclined plane 8 and the top 9 narrowing towards the bottom of the funnel, while the distance between the long sides 10 is constant. The funnel therefore extends for the full width between the long sides 10. The container 1 is provided with a conveyor for discharging material through the outlet 5 when the container 1 is located in a raised position. The illustrated conveyor is a screw conveyor 13, which is coaxial with the container's axis of rotation 6, and which is located at the bottom of the funnel formed by the inclined plane 8 and the top 9.

The screw conveyor 13 extends through one long side 10, and projects over a conveyor belt 23. The part of the screw conveyor 13 that is located outside the container 1 is provided with a cover 27, which is rotationally secured in the container 1, and which has an opening that forms an outlet 14 for the screw conveyor 13. When the container 1 is located in a raised position the outlet 14 faces downwards, thus causing material that is discharged through the outlet 14 to fall down on to the conveyor belt 23.

Both the screw conveyor 13 and the container 1 are rotatably mounted in bearings 16, one on each side of the container 1. The bearings 16 are surrounded by bearing houses 21, and supported by bearing brackets 20, which in turn are supported by a framed structure 15. It can be seen that the framed structure 15 forms part of the base frame 18. The screw conveyor 13 is driven by a non-illustrated electric gear motor that may be mounted on one of the bearing brackets 20.

The rotation of the container 1 is achieved by means of linear actuators 17 extending between the framed structure 15 and the container 1. The linear actuators are mounted at one end in pivots 25 in actuator brackets 24 that are attached to the framed structure 15, and at the other end mounted in pivots 26 in extension of a cross beam 22 that is attached to the top 9 of the container. The linear actuators 17 are hydraulic cylinders, and by supplying hydraulic oil from a non-illustrated source, for example an electrically operated hydraulic unit, the container 1 can be moved from a lowered to a raised position. The hydraulic unit can be controlled from a non-illustrated control panel, which can also control the screw conveyor 13 and the conveyor belt 23, and be provided with safety devices such as emergency stop and overload protection.

The framed structure 15 is composed of welded steel components, the base frame 18 being composed of shaped steel beams, while the drive-up ramp 19, the bearing brackets 20 and the actuator brackets 24 are sheet metal structures.

During operation, the lorry 3 is reversed into the container 1 when it is in a lowered position, as illustrated in fig. 1. The lorry tips material on to the bottom 7 of the container, and drives out of the container. Thereupon, although strictly speaking this is not necessary, the covers 11 are closed. The container 1 is then rotated to a raised position, as illustrated in fig. 2, and the material drops with the aid of gravity on to the bottom of the funnel formed by the inclined plane B and the top 9. The screw conveyor 13 is started, discharging the material through the outlet 14 in the cover 27 with the result that the material drops down on to the conveyor belt 23. The conveyor belt 23 passes on the material, for example to be ground up or burnt.

Some types of material, for example sludge, will stick together, perhaps also sticking to the walls of the container. It will be difficult for such material to move towards the container's outlet. In order to enhance the material's movement towards the outlet, the container in its raised position may be movable between positions where different sides of the container that form a funnel towards the outlet are substantially vertical. In the case of the container in fig. 2 this can be implemented by having the container 1 rotatable off-centre between a position where the inclined plane 8 is approximately vertical or overhanging and a position where the top 9 is approximately vertical or overhanging.

It can be seen that the device employed for further handling of the material, i.e. the conveyor belt 23, is standing on a base that is located only slightly lower than the base on which the lorry stands during tipping, i.e. the bottom 7 of the container. This height difference, which is composed of the total height of the base frame 18 and the bottom 7 of the container, may, for example, be 20 cm. This height difference is so slight that it can be realised by almost all receivers of material from lorries.

The advantage of the base frame 18 is that the device according to the invention can be placed on a base, which is not absolutely level or hard, for example on soil. The base frame 18, however, is not strictly speaking necessary, and may be omitted if the container 1 and/or the height of the bearing brackets 20 and the actuator brackets 24 are adapted thereto. The bearing brackets 20 and the actuator brackets 24 may, for example, be cast in a concrete base, which can also be the base for the conveyor belt 23. The bottom 7 of the container in the container's lowered position can rest directly on this concrete base. In this case the device employed for the further handling of the material, i.e. the conveyor belt 23, and the lorry will be standing on bases at substantially the same level.

The device according to the invention can be adapted to the material for which it has to be employed and to the desired further handling of the material. An example of an alternative embodiment may be that the container is not provided with a screw conveyor or other conveyor means, and that the container's outlet 5 is also funnel-shaped in the container's transverse direction. In this case the distance between the long sides 10 may also become narrower towards the outlet 5, which may then be located halfway between the long sides 10. The outlet may be provided with a closing device, for example a sliding plate, and be connected to an apparatus for directly filling the material into sales packaging. The outlet may also be provided with a mill. The container 1 may furthermore be provided with a vibrator for vibrating the material towards the outlet 5 when the container 1 is located in a raised position. This may be an embodiment of the invention that can be employed, for example, in a turfed roof, where a lorry tips turf into the container. The container is then rotated to a raised position, and the turf is vibrated towards the outlet, where it is run through the mill and filled directly into bags for sale to the consumer.

## Claims

1. A device comprising a container (1) with an intake (2) for receiving material from a lorry (3) and an outlet (5) for discharging the material for further handling, **characterised in that**
the container (1) has a substantially horizontal axis of rotation (6) at the outlet (5) and is rotatable between
a lowered position where a bottom (7) in the container is located lower than the axis of rotation (6) and the outlet (5), and where the lorry (3) can tip material on to the bottom (7) of the container, and
a raised position where the bottom (7) of the container is located higher than the axis of rotation (6) and the outlet (5), and with the aid of gravity the material can be discharged through the outlet (5).

2. A device according to claim 1,
**characterised in that** the bottom (7) of the container is adapted to enable it to be driven on by the lorry (3) when the container (1) is located in a lowered position, the intake (2) being disposed at an end of the container's bottom (7).

3. A device according to claim 1 or 2,
**characterised in that** the outlet (5) is arranged so that it does not move relative to the horizontal axis of rotation (6).

4. A device according to one of the preceding claims,
**characterised in that** a side of the container (1) extending between the bottom (7) of the container and the outlet (5) forms a lower inclined plane (8) when the container (1) is located in a lowered position, forming a part of a funnel towards the outlet (5) when the container (1) is located in a raised position.

5. A device according to one of the preceding claims.
**characterised in that** a side of the container (1) extending between the intake (2) of the container and the outlet (5) forms a top (9) when the container (1) is located in a lowered position, forming a part of a funnel towards the outlet (5) when the container (1) is located in a raised position.

6. A device according to one of the preceding claims,
**characterised in that** the container (1) is provided with a conveyor for discharging material through the outlet (5) when the container (1) is located in a raised position.

7. A device according to claim 6,
**characterised in that** the conveyor is a screw conveyor (13), which is coaxial with the container's axis of rotation (6) and has an outlet (14) on the side of the container (1).

8. A device according to one of the claims 1-5,
**characterised in that** the container's outlet (5) is funnel-shaped and has a closing device.

9. A device according to one of the preceding claims,
**characterised in that** the container (1) is provided with a vibrator for vibrating the material towards the outlet (5) when the container (1) is located in a raised position.

10. A device according to one of the preceding claims,
**characterised in that** the container (1) in its raised position is movable between positions where different sides of the container that form a funnel towards the outlet (5) are substantially vertical.

11. A device according to one of the preceding claims,
**characterised by** a framed structure (15) that supports bearings (16), which enable the container (1) to be rotated, and that linear actuators (17) for enabling the container (1) to be rotated extend between the framed structure (15) and the container (1).
